# EUROPEAN PATENT APPLICATION

(11) **EP 2 439 580 A1**
(43) Date of publication of application: **11.04.2012**
(21) Application number: 10290527.0
(22) Date of filing: 01.10.2010
(51) Int. Cl.: G02C 11/06

(54) **Data exchange system**

(71) Applicant: Ophtimalia, 14460 Colombelles (FR)
(72) Inventor: Cauvet, Philippe, 14000 Caen (FR); Auvray, Philippe, 14000 Caen (FR)
(74) Representative: Grünecker, Kinkeldey, Stockmair & Schwanhäusser

(57) **Abstract**

The invention relates to a data exchange system comprising a spectacle frame and at least one detachable temple, a base station for receiving the detachable temple when detached from the spectacle frame, wherein the detachable temple comprises a connecting interface configured to mate a connecting interface, in particular an electrical connecting interface, of the spectacle frame and an electrical connecting interface of the base station. This data exchange system allows a user to carry the glasses in a comfortable manner whereas, at the same time, a secure data exchange from any devices incorporated into the spectacles can be ensured.

## Description

The invention relates to a data exchange system comprising a spectacle frame and at least one temple.

Such a data exchange system is known from US 7,192,136 disclosing eye glasses with electrical components therein or attached thereto for signal capturing, signal processing, signal transmission, data acquisition, data processing and/or data storage Cords attached to the temples allow an electrical connection with a base device so that electrical signals can be transmitted from the base via the cords to the eye glasses and vice versa. One application of the system is to deliver audio signals from an MP3 player or an RF receiver to speakers incorporated in the temples. Due to the use of cords to provide the electrical signals to the devices in the temple, this system is however rather uncomfortable for a user.

US 6,769,767 proposes a similar system with eyewear comprising a spectacle frame and exchangeable temples housing a transceiver forming ad hoc networks with other devices. Due to a Bluetooth connection, the eyewear according to US 6,769,767 can communicate wirelessly, with other devices, such as a radio, a CD player etc. By providing a detachable temple, the eyewear according to US 6,769,767 is more flexible as it allows connecting different temples comprising different types of incorporated devices, such as audio devices, a camera, a speaker or a microphone. This kind of data exchange providing eyewear, however, is less suitable to ensure the confidentiality of data transfer, which is of utmost importance when eyewear with embarked sensors is used for sensing medical data. The medical data should only be accessible to authorized medical staff.

It is therefore the object of the present invention to provide a data exchange system comprising a spectacle frame and at least one temple that is comfortable to wear but, at the same time, allows for a secure data transfer.

This object is achieved with the data exchange system according to claim 1. The inventive data exchange system comprises a spectacle frame and at least one detachable temple, a base station for receiving the detachable temple when detached from the spectacle frame, wherein the detachable temple comprises an electrical connecting interface configured to mate a connecting interface, in particular an electrical connecting interface, of the spectacle frame and an electrical connecting interface of the base station.

By using a detachable temple having an electrical connecting interface which both mates with a connecting interface of the spectacle frame and at the same time mates the electrical connecting interface of the base station, a simple data transfer towards the base station is enabled without having to use wireless data transfer or a wire-based data transfer. By always having the temple in a connected state, either connected to the spectacle frame or connected to the base station via its connecting interface, the connecting interface is also always protecting against dirt, humidity, etc.

Preferably, the connecting interface of the spectacle frame is also an electrical connecting interface which allows electrical connection in case an electrical device is provided on the spectacle frame.

Preferably, the data exchange system can further comprise a second detachable temple with a second electrical connecting interface mating a second electrical connecting interface of the base station and a second connecting interface of the spectacle frame. This enhances the flexibility of the system.

Preferably, the second electrical connecting interface can be different to the first electrical connecting interface, in particular incompatible with the first connecting interface. Thus, an erroneous connection between the temples on the wrong side of the spectacle frame or in the base station can be prevented.

Advantageously, the spectacle frame can comprise a device configured to receive its power supply via the first or second electrical connecting interface. By providing power supply via temples and the interface, the device on the spectacle frame can be kept smaller compared to an electrical device embarking its own power source.

Advantageously, the device provided on the spectacle frame can comprise at least one antenna circuit. Further preferred, the data exchange system can comprise at least one contact lens comprising an antenna circuit. Via the antenna circuit on the device provided on the spectacle frame, the antenna circuit on the contact lens can be energized, for instance for measuring the intraocular eye pressure (IOP) and signals can received from the contact lens.

Advantageously, the first and/or second temple can comprise at least one of a rechargeable battery, a storage means, a micro-controller, a sensing device, a wireless data transmitting and/or receiving device and a signal generator. Advantageously, the sensing device can be at least one of a temperature sensing device, an accelerometer, an gyrometer, a cardiac rhythm measuring device. Via the connecting interface, it is thus possible to read out the various devices, to recharge them, to update software etc. Thus, a flexible data exchange system can be provided.

Advantageously, only the second temple can comprise a rechargeable battery. Further preferred, the first connecting interface comprises a multiple pin connector allowing at least one of power supply, data transfer and signal transfer from the first temple to the spectacle frame and/or the second temple. Even further preferred, the multiple pin connector can be one of a standard connector, in particular one of a USB1 or USB2 or USB3 connector of type A, or type B or a USB mini, or a USB micro or a FireWire IEEE1394 connector. Thus, the devices in the first temple are powered by the battery in the second temple and the interfaces can be configured such that, via the first connecting interface, signal and data transfer and/or power supply can be provided delivered, whereas the second connecting interface is simplified as it is only configured to provide power supply. In case the multiple pin connector is already a standard connector, such as a USB connector, it is possible to directly use a standard interface at an electronic device, like a computer, as a base station. For instance it becomes possible to simply stick the temple into the USB port of a computer or any other device comprising a mating connector to enable data transfer and/or charging.

Preferably, the second connecting interface can be configured to allow power supply. In this context, it is further preferred that the second connecting interface can be configured to only allow power supply. Thus, an erroneous connection of electronic devices to a power supply means, which might harm the devices, can be prevented.

Preferably, the base station can comprise visual or audible means to inform a user of the connective state of a temple with the base station. This facilitates the use of the system and ensures correct connecting states.

Advantageously, the base station can comprise a third connecting interface towards an additional electronic device, in particular a computer and/or storage means and/or printer and/or screen display and/or an external power supply.

Preferably, the data exchange system can further comprise a securing means preferably comprising a hook portion and a mating recess, to secure the connection of the detachable temple with the spectacle frame. Thus any unintentional detachment of a temple can be prevented.

According to a preferred realisation, the securing system is not part of the connecting interfaces. In this case standard connectors can be used but nevertheless a mechanical connection be provided in addition so that an unintentional detachment can be prevented.

The invention also relates to eye glasses for use in a data exchange system as described above wherein the eye glasses comprise a spectacle frame and at least one detachable temple.

The invention also relates to a method for exchanging data between a device provided on eye glasses comprising a spectacle frame and a detachable temple, and a base station comprising the steps of:
- a.: acquire data,
- b.: store data in a storage device in a detachable temple,
- c.: detach the temple,
- d.: connect the temple to the base station, and
- e.: read data out of storage device.

This method allows for a secure data transfer towards the base station while, at the same time, a user can comfortably carry the spectacle frame.

The object of the invention is also achieved with the method according to claim 7. This method relates to a method for charging a battery provided in a detachable temple connected to a spectacle frame comprising the steps of:
- f.: detaching the temple from the spectacle frame,
- g.: connecting the temple to a base station,
- h.: charging the battery via the base station.

This method allows a simplified charging of the battery necessary to run devices provided in the temple or the spectacle frame while, at the same time, the user's comfort is kept.

Preferably, the read out and charging steps can be carried out simultaneously. According to a variant, data is read out from one temple and the charging of the battery occurs in the second temple.

Preferably, the methods can be carried out using a data exchange system as described above.

In the following, features of the invention will be described in more detail in connection with the preferred embodiments.
- Figure 1: illustrates a first embodiment of a data exchange system according to the invention,
- Figure 2: illustrates a second embodiment of a data exchange system according to the invention,
- Figure 3: illustrates a third embodiment,
- Figure 4: schematically illustrates a fourth embodiment of the invention dealing with the method of using a data exchange system based on a block diagram, and
- Figure 5: schematically illustrates a fifth embodiment of the invention dealing with the method of using a data exchange system based on a block diagram.

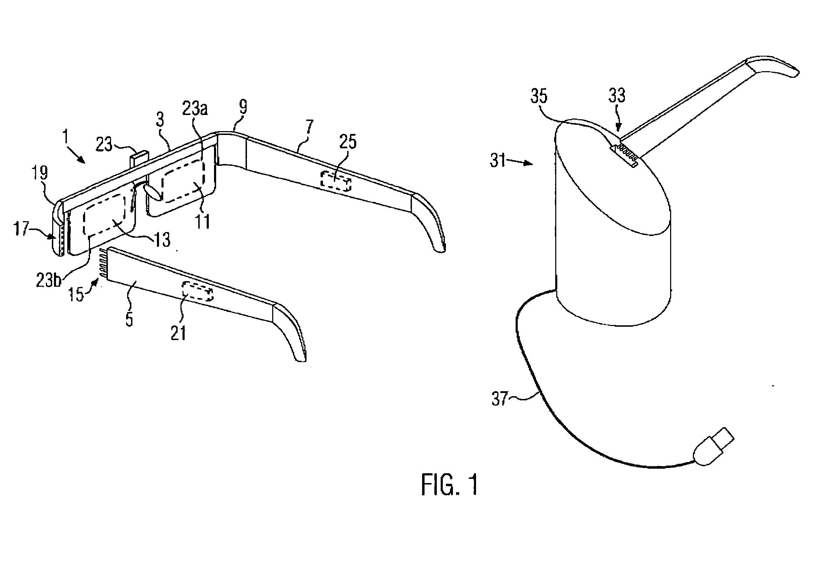

Figure 1 illustrates a first embodiment of the data exchange system according to the invention. The data exchange system comprises a pair of eye glasses 1 with a spectacle frame 3 and a first and second temple 5, 7. In the illustration of Figure 1, only temple 7 is connected to the spectacle frame 3 which can be directly or via a hinge 9. Temple 5 in this embodiment is a detachable temple, illustrated in Figure 1 in the detached state. The temple 5 can be connected directly to the spectacle frame 3 or via hinge 19, like in this case. The spectacle frame 3 carries two glasses 11, 13 which can be integrally formed with the spectacle frame 3 or attached to the spectacle frame 3 by means known in the art.

According to the invention, the detachable temple 5 furthermore comprises an electrical connecting interface 15. In this embodiment, the electrical connecting interface 15 is the male part of a connector with six pins, and the spectacle frame 3 comprises a mating connecting interface 17 at the hinge area 19 of the spectacle frame 3.

The mating connecting interface 17 can either be configured as an electrical connecting interface, thereby allowing an electric connection between the first temple 5 and the spectacle frame 3 or, in a variant, could also only be an interface enabling the mechanical connection between the first temple 5 and the spectacle frame 3, in case that no electrical connection is needed towards the spectacle frame 3.

The first temple 5, furthermore, comprises at least one device 21 which can be at least one of a rechargeable battery, a storage means, a micro-controller, a sensing device, a wireless data transmitting and/or receiving device or a signal generator, wherein the sensing means can be any one of a temperature sensing means, an accelerometer, a gyrometer or a cardiac rhythm measuring device. The first temple 5 could also comprise an audio and/or video and/or telephone device. The device 21 can either be integrated into the temple 5, e.g by molding it inside the first temple 5, or could be attached to the temple 5 by any means known in the art.

In the variant, in which the mating connecting interface 17 is an electrical connecting interface, the spectacle frame 3 and/or the second temple 7 comprises at least one further device 23 and/or 25. Like device 21, the devices 23 or 25 could be any one of a rechargeable battery, a storage means, a micro-controller, a sensing device, a wireless data transmitting and/or receiving device, or a signal generator, wherein the sensing means can be any one of a temperature sensing means, an accelerometer, a gyrometer or a cardiac rhythm measuring device.

Device 23 and/or 25 are either integrated into the spectacle frame 3 or the second temple 7 or attached to it in any way known in the art. In case that an electric device 25 is present in the second temple 7, it is furthermore ensured that an electrical connection is provided between the spectacle frame 3 and the second temple 7.

The data exchange system according to the first embodiment furthermore comprises a base station 31, which is characterised by the fact that it comprises an electrical connecting interface 33 at the bottom of a connecting recess 35 and which is configured such that it mates the electrical connecting interface 15 of the first temple 5. Thus, the electrical connecting interface 33 of the base station 31 in this embodiment is the female part of the connector. The base station furthermore comprises a connector 37 to be able to connect the base station 31 with an external electronic device, in particular a computer and/or storage means and/or printer and/or screen display and/or an external power supply.

In the first embodiment, the electrical connecting interface 15 comprises is a six pin male connector. Of course, the electrical connecting interface could be of any other type depending on the requirements of the data exchange system. Typically the connection of the six pin connecter shall allow power supply using two of the pins, signal transfer using two other pins and data transfer using the last pair of pins. In the connected state with the spectacle frame 3 comprising the corresponding female connecting interface 17, it thus becomes possible to provide the power supply to devices provided on the spectacle frame 3 and/or the second temple 7, to allow signal transmission and reception as well as further data transfer.

In the following a particular advantageous application of the data exchange system according to the invention will be described.

In this application according to the invention, the spectacle frame 3 comprises an antenna circuit 23a attached to one of the glasses 11 or 13, allowing the power supply and signal transfer towards a contact lens carrying an antenna circuit and an LC circuit to measure intraocular eye pressure (IOP) of a patient. Eventually, a second antenna 23b circuit is attached to the second glass 11 or 13 to power up and read out the signals provided from a second contact lens carried by the patient. The signals sensed by the contact lenses are captured by the antenna circuit on the glasses 11 and/or 13 and are transferred via the connecting interface 17 and 15 towards a storage means being part of the temple 5 e.g. using embedded wires of conductive traces.

Of course in this particular application no additional device 23 needs to be present.

A signal generator in the temple 5 in turn provides the signals of a given shape to the antenna circuit. In turn the signals received by the antenna circuit on the glasses are then used to analyze the intraocular eye pressure of the patient.

To read out the storage means embarked onto temple 5, the medical staff can simply detach the temple 5 from the spectacle frame 3 and connect it to the electrical connecting interface 33 of the base station 31, for instance by introducing it into the recess 35 at the bottom of which the female connector 33 is arranged. The reading out of the data in the storage means of the temple 5 can be accompanied by recharging an embarked battery and/or by re-programming a micro-controller embarked into the temple 5. Via interface 37, the data read out of the temple 5 can be transferred to a computer for further analysis and, at the same time, the power supply can be provided to recharge the battery.

In contrast to wire-based or wireless data transfer, the use of a detachable temple having a connecting interface that mates interfaces at the spectacle frame 3 and at the base station 33, not only allows a comfortable wearing of the glasses by the user, here for instance a patient, but also a secured data transfer so that only authorized people can read out the confidential medical data. Using the same connecting interface furthermore provides the advantage that the overall design remains simple.

According to a variant, the base station 31 could be the final electronic device, such as a computer, in case a standardized electrical connector, e.g. a USB connector, a micro-USB connector or an IEEE1394, is used as the electrical interface 15, 17 and 33.

According to a variant, the male and female part could be exchanged.

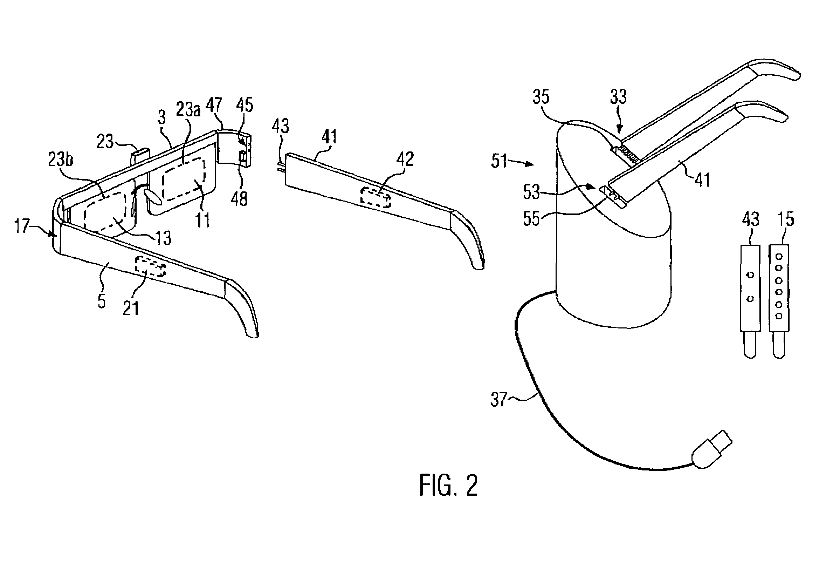

Figure 2 illustrates a second embodiment of the inventive data exchange system. Elements and features carrying the same reference numeral will not be explained in detail again, but reference is made to the above detailed description.

In the second embodiment, not only the first temple 5 is detachable from the frame 3, but also the second temple 41 is detachable and comprises a second electrical connecting interface 43 mating with a corresponding connecting interface 45, in particular electrical connecting interface, at the hinge portion 47 of the spectacle frame 3.

In this embodiment, the second temple 41 can comprise electrical devices 42, such as a rechargeable battery, a micro-controller, a storage means etc, incorporated or attached thereto.

In a preferred realization of the second embodiment, the second temple 41 comprises a rechargeable battery which can be used to provide power supply to the device 23 on the spectacle frame and/or the devices 21 of the first temple 5. Whereas, in principle, the connecting interface of the second temple 41 could be the same as for the first temple 5, in a further preferred variant of the second embodiment, the electrical interface 43 is, however, different to the first connecting interface 15. In particular, this interface is not compatible with the first connecting interface so that an unintentional erroneous connection of the second temple 41 with the first interfaces 17 or vice versa can be prevented.

Eventually, according to a further variant, the connecting interfaces could be arranged such that a temple with the second connecting interface could connect to both types of female connecting interfaces, whereas the temple with the first connecting interface can connect only to one type of female connecting interface.

The base station 51 in the second embodiment comprises a first interaction recess 35 with the mating electrical connecting interface 33 at its bottom and, in contrast to the first base station 31, furthermore comprises a second recess 53 with a second mating connecting interface 55 configured to receive the connecting interface 43 of the second temple 41. According to one further variant of the invention, the connecting interface 45 of the spectacle frame 3 and the connecting interface 55 of the base station 51 are the same.

To the right of the base station 51, the arrangement of the reception recesses for the pins of the female electrical connecting interface of the first type 33 and the second type 55 are schematically illustrated. As can be seen both connecting interfaces are incompatible with each other due to the positioning of the recesses so that a user cannot erroneously plug the first and second temple into the wrong connecting recess 35 and 53 of the base station 51.

Again, the male and female part of the connecting interface 43 and 45 could be exchanged.

In the connected state, the eye glasses of the second embodiment have the advantage that, due to the presence of the battery means 42 in the second temple, the weight of the temples 5 and 43 can be equalized as the first one carries the micro-controllers, storage means etc., while the second one carries the battery. When charging and reading out the temples, both temples can be detached and connected to the base station which increases flexibility, in particular the charging can be dedicated and therefore realized in a faster manner as in the first embodiment. In one variant of the second embodiment only the second temple comprises the rechargeable battery.

As in the first embodiment, the base station 51 comprises a third connecting interface 37, to allow the connection towards an external device, such as a computer, and/or to allow the power supply.

In case that the first and second interface 15 and 43 are the same or at least compatible with each other, then it is furthermore possible to combine the glasses of the second embodiment with the basis 31 of the first embodiment.

According to a further variant, the basis 31 of the first embodiment could be used to read out data out of temple 5, whereas the battery means 42 in temple 41 can be charged using a charging device plugged to an AC power line.

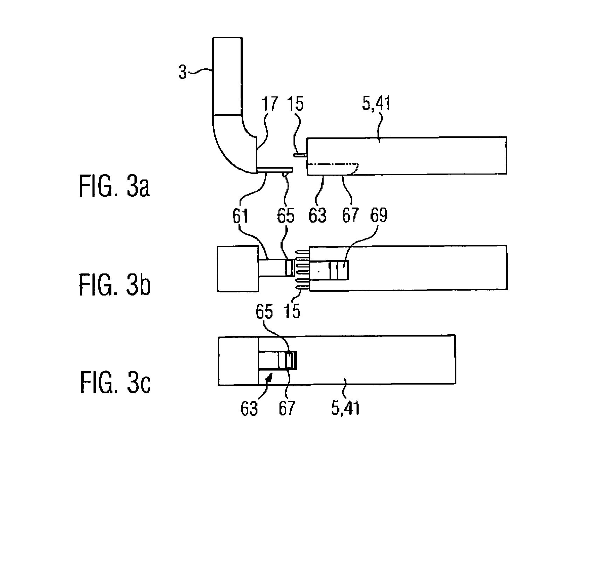

Figure 3 illustrates three views of a third embodiment which can be combined with any one of the first and second embodiments of the data exchange system according to the invention. The first view shows the temple 5 and the frame 3 in a detached state from the top. The second view the detached state in a side view and the third a attached and locked state from the side.

This embodiment relates to an improvement of the connection of the detachable temple 5 or 41. To ensure a proper attachment of the temples to the frame, the third embodiment proposes to use a mechanical securing means comprising a hook portion 61 and a mating recess 63 in the temple 5 or 41. In this embodiment, the hook portion 61 is formed at the spectacle frame 3 whereas the recess 63 is part of the temple 5, 41. To allow the use of standard connectors, the hook portion 61 and the recess 63 do not form part of the connector interfaces 15 and 17. In a variant, the connecting means could, however, be incorporated with the connecting interface.

The hook portion 61 is flexibly arranged and comprises a nose part 65 at or near to its extremity which mates with a corresponding mating groove 67 in recess 63. In this embodiment, the groove 67 is realized as a through hole 69 in the lateral side of the temple 5, 41 as illustrated in the third part of Figure 3. Thus, a user can push the nose part 65 to release the locked state and will be able to detach temple 5 by pulling it away from the frame 3.

The hinge portion 9 19, 47 could be further arranged such that when opening the temples, the powering up of the device on the frame is enabled, e.g. using a switch means, and the device is shut off when the temples are closed. For instance a micro- or mini switch 48 could be provided at one o both hinge portions 9, 19, 47 or could be provided on one or both temples 5, 41.

Features of the various embodiments and variants described above can be individually combined with each other to achieve further variants of the invention.

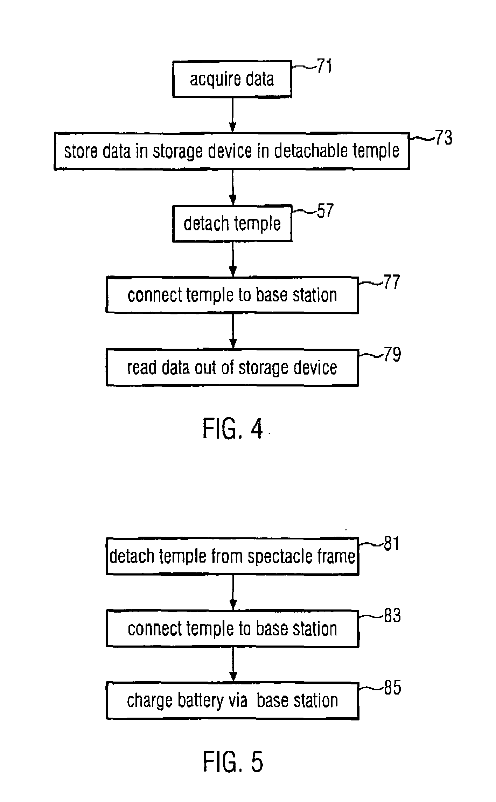

According to the invention, the data exchange system can be used according to a fourth embodiment illustrated in figure 4 to provide a method for exchanging data between a device provided on eyeglasses 1 comprising a spectacle frame 3 and at least one detachable temple 5 and a base station 31 comprising the steps of: acquire data by the device 23 or 25 (step 71) and store the data in a storage device 21 in a detachable temple 5 (step 73). In the next step (step 75) the temple 5 is detached from the frame 3 and connected to the connecting interface 33 of the base station 31 (step 77). Then the data is read out of the storage device into a memory of the base station or an external device connected to the base station 31 (step 79), where the data can then be analyzed.

Furthermore, the data exchange system can be used according to a fifth embodiment illustrated in Figure 5 to provide a method for charging a battery 25 provided in a detachable temple 41 connected to a spectacle frame 3 comprising the steps of: Detaching the temple 41 from the spectacle frame 3 (step 81), connect it to the base station 51 (step 83) and charge the battery (85).

The fifth and fourth embodiments can be combined and carried out at the same time, and furthermore any one of the data exchange systems according to the first to third embodiment or any of their variants and combinations can be used to carry out the methods.

## Claims

1. Data Exchange system comprising :
- a spectacle frame and at least one detachable temple
- a base station for receiving the detachable temple when detached from the spectacle frame
wherein the detachable temple comprises an electrical connecting interface configured to mate a connecting interface, in particular an electrical connecting interface, of the spectacle frame and an electrical connecting interface of the base station.

2. Data exchange system according to claim 1, further comprising a second detachable temple with a second electrical connecting interface configured to mate a second electrical connecting interface of the base station and a second connecting interface, in particular an electrical connecting intertace, of the spectacle frame.

3. Data exchange system, according to claim 2, wherein the second electrical connecting interface is different to the first electrical connecting interface, in particular incompatible with the first connecting interface.

4. Data exchange system according to one of claims 1 to 3, wherein the spectacle frame comprises a device configured to receive its power supply via the first or second electrical connecting interface.

5. Data exchange system according to claim 4, wherein the device comprises at least one antenna circuit.

6. Data exchange system according to claim 5, further comprising at least one contact lens comprising an antenna circuit.

7. Data exchange system according to one of claims 1 to 6, wherein the first and/or second temple comprises at least one of a rechargeable battery, a storage means, a micro controller, a sensing device, a wireless data transmitting and/or receiving device and a signal generator.

8. Data exchange system according to claim 7,'wherein the sensing device is at least one of a temperature sensing device, an accelerometer, a gyrometer, a cardiac rhythm measuring device.

9. Data exchange system according to claim 8, wherein only the second temple comprises a rechargeable battery.

10. Data exchange system according to one of claims 1 to 9, wherein the first connecting interface comprises a multiple pin connector allowing at least one of power supply, data transfer and signal transfer from the first temple to the spectacle frame and/or the second temple.

11. Data exchange system according to claim 10, wherein the multiple pin connector is a standard connector, in particular a USB1 or a USB2 or a USB3 connector of type A, or type B or a USB mini, or a USB micro or a FireWire IEEE1394 connector.

12. Data exchange system according to one of claims 1 to 11, wherein the second connecting interface is configured to allow power supply.

13. Data exchange system according to claim 12, wherein the second connecting interface is configured to only allow power supply.

14. Data exchange system according to one of claims 1 to 13, wherein the base station comprises a third connecting interface (45) towards an additional electronic device, in particular a computer and/or storage and/or printer and/or screen display and/or external power supply.

15. Data exchange system according to one of claims 1 to 14, wherein the base station furthermore comprises audible and/or visual means configured for outputting an audible and/or visual signal when a temple is connected to the base station.

16. Data exchange system according to one of claims 1 to 15 further comprising a securing means preferably comprising a hook portion (61) and a mating recess (63), to secure the connection of the detachable temple (5, 41) with the spectacle frame (3).

17. Data exchange system according to claim 16, wherein the securing system is not part of the connecting interfaces (15, 17).

18. Eye glasses for use in a Data exchange system according to one of claims 1 to 17, comprising a spectacle frame and at least one detachable temple.

19. Method for exchanging data between a device provided on eye glasses comprising a spectacle frame and a detachable temple and a base station comprising the steps of:
a. acquire data
b. store data in a storage device in a detachable temple
c. detach the temple
d. connect the temple to the base station, and
e. read data out of storage device

20. Method for charging a battery provided in a detachable temple connected to a spectacle frame comprising the steps of:
f. Detaching the temple from the spectacle frame
g. Connecting the temple to a base station
h. Charging the battery via the base station.

21. Method according to claim 19 and 20, wherein the read out and charging steps are carried out simultaneously.

22. Method according to one of claims 19 to 21, using a data exchange system according to one of claims 1 to 17.
